# EUROPÄISCHE PATENTSCHRIFT

(11) **EP 4 332 391 B1**
(45) Veröffentlichungstag und Bekanntmachung des Hinweises auf die Patenterteilung: **18.06.2025**
(21) Anmeldenummer: 23193557.8
(22) Anmeldetag: 25.08.2023
(51) Int. Cl.: F16B 13/12

(54) **BEFESTIGUNGSELEMENT UND VERFAHREN ZUM BEFESTIGEN**
FASTENING ELEMENT AND METHOD FOR FASTENING
ELÉMENT DE FIXATION ET PROCÉDÉ DE FIXATION

(30) Priorität: 30.08.2022 DE 102022208997
(43) Veröffentlichungstag der Anmeldung: 06.03.2024
(73) Patentinhaber: Adolf Würth GmbH & Co. KG, 74653 Künzelsau (DE); Würth International AG, 7000 Chur (CH)
(72) Erfinder: Pfoehler, Bernd-Rupert, 70567 Stuttgart (DE); Schade, Holger, 73663 Berglen (DE); Rosskamp, Heiko, 72099 Adelberg (DE)
(74) Vertreter: Patentanwälte Ruff, Wilhelm, Beier, Dauster & Partner mbB

(56) Entgegenhaltungen:
- EP-B1- 1 518 056

## Beschreibung

Die Erfindung betrifft ein Befestigungselement mit einer Dübelhülse aus Kunststoff und einem Einschlagelement zum Eintreiben in die Dübelhülse, wobei das Einschlagelement die Dübelhülse beim Eintreiben des Einschlagelements in die Dübelhülse wenigstens abschnittsweise in radialer Richtung aufspreizt. Die Erfindung betrifft auch ein Verfahren zum Befestigen eines Werkstücks an einem Gegenstand.

EP 1 518 056 B1 offenbart einen Spreizdübel aus Kunststoff zum Aufspreizen mit einem Spreiznagel.

Mit der Erfindung sollen ein Befestigungselement mit einer Dübelhülse aus Kunststoff und einem Einschlagelement zum Eintreiben in die Dübelhülse sowie ein Verfahren zum Befestigen eines Werkstücks an einem Gegenstand verbessert werden.

Erfindungsgemäß ist hierzu ein Befestigungselement mit einer Dübelhülse aus Kunststoff und einem Einschlagelement zum Eintreiben in die Dübelhülse vorgesehen, bei dem das Einschlagelement die Dübelhülse beim Eintreiben des Einschlagelements in die Dübelhülse wenigstens abschnittsweise in radialer Richtung aufspreizt, wobei das Einschlagelement einen Schaft und einen Kopf aufweist, wobei der Schaft wenigstens abschnittsweise mit einer Gewindeausbildung und der Kopf mit einer Außenantriebsausbildung versehen ist, wobei der Kopf einen Schlagabschnitt aufweist, der sich ausgehend von der Außenantriebsausbildung bis zum freien Ende des Kopfes erstreckt und wobei der Schlagabschnitt eine zylindrische Form und einen kleineren Außendurchmesser aufweist als die Außenantriebsausbildung.

Das erfindungsgemäße Befestigungselement ist nach Art eines Schlagdübels oder Nageldübels ausschließlich für die vorläufige Befestigung von Werkstücken mit geringer Haltekraft vorgesehen. Durch einfaches Einschlagen des Einschlagelements kann ein schnelles Vorfixieren des Werkstücks erfolgen. Zweite Befestigungsmittel, die für die endgültige Befestigung vorgesehen sind, können dann nach dem Vorfixieren angeordnet werden. Beispielsweise kann aber auch die Vorfixierung mittels des erfindungsgemäßen Befestigungselements dazu dienen, das Werkstück bis zum Aushärten oder Trocknen eines Klebstoffs festzuhalten. Das Entfernen des erfindungsgemäßen Befestigungselements nach dem endgültigen Befestigen des Werkstücks am Gegenstand erfolgt dann in sehr einfacher Weise über die Außenantriebsausbildung, beispielsweise einen Außensechskant. Das Vorsehen eines separaten Schlagabschnitts ermöglicht es, das erfindungsgemäße Befestigungselement auch mit hoher Schlagkraft eintreiben zu können, ohne dass zu befürchten ist, dass die Außenantriebsausbildung dabei Schaden nimmt. Der Schlagabschnitt wird beim Einschlagen möglicherweise deformiert und vergrößert seinen Außendurchmesser.

Da der Außendurchmesser des Schlagabschnitts aber kleiner ist als die Außenantriebsausbildung, bleibt auch bei einer gewissen Deformation der Außendurchmesser des Schlagabschnitts noch kleiner als der Außendurchmesser der Antriebsausbildung, so dass ein problemloses Entfernen des Befestigungselements durch Ausschrauben des Einschlagelements möglich ist. Beispielsweise ist der Außendurchmesser des Schlagabschnitts kleiner als ein gedachter, in die Außenkontur der Außenantriebsausbildung einbeschriebener Kreis der Außenantriebsausbildung, insbesondere 10% bis 25% kleiner als der einbeschriebene Kreis der Außenantriebsausbildung. Das Einschlagelement weist üblicherweise einen Schaft in Form einer Nagelschraube mit Sägezahngewinde auf. Die Dübelhülse kann ebenfalls auf eine Nagelschraube abgestimmt sein. Mit dem erfindungsgemäßen Befestigungselement lässt sich eine sehr schnelle Vorfixierung eines Werkstücks erreichen. Beispielsweise kann bei der Befestigung eines Geländers auf einem Betonboden das Geländer sehr schnell und mit wenigen Hammerschlägen vorfixiert werden. Die endgültige Befestigung wird dann dadurch vorgenommen, dass Löcher durch einen Bodenabschnitt des Geländers hindurch in den Betonboden eingebohrt werden und das Geländer dann mittels geeigneter Befestigungsdübel, beispielsweise Chemiedübel, die in den Beton eingeklebt werden und passenden Schrauben, oder auch Rahmendübel, erfolgt. Nach dem endgültigen Befestigen des Geländers werden die erfindungsgemäßen Befestigungselemente dann wieder entfernt und beispielsweise werden in die Durchgangsöffnungen im Bodenabschnitt des Geländers, aus dem die erfindungsgemäßen Befestigungselemente herausgeschraubt werden, dann auch zweite Befestigungselemente für die endgültige Befestigung eingeschraubt. Selbstverständlich können im Wesentlichen beliebige Werkstücke an beliebigen Gegenständen mit dem erfindungsgemäßen Befestigungselement vorfixiert werden, beispielsweise Geländer an Bauwerken, Fensterrahmen an Fensterlaibungen, Türzargen am Mauerwerk oder dergleichen. Wesentlich ist, dass mittels der erfindungsgemäßen Befestigungselemente eine extrem schnelle Vorfixierung durch wenige Hammerschläge erfolgen kann, wobei die Befestigungskraft beziehungsweise Haltekraft, die durch die erfindungsgemäßen Befestigungselemente ausgeübt wird, deutlich kleiner ist als die Befestigungskraft oder Haltekraft, die bei der endgültigen Befestigung erforderlich ist. Beispielsweise muss ein Geländer so sicher befestigt sein, dass es auch dann, wenn sich eine Person gegen das Geländer wirft, nicht abbricht. Mit dem erfindungsgemäßen Befestigungselement ist eine so große Haltekraft nicht erforderlich, da das erfindungsgemäße Befestigungselement lediglich für die Vorfixierung des Geländers vorgesehen ist.

In Weiterbildung der Erfindung weist das Befestigungselement einen Anlageabschnitt zwischen dem Kopf und dem Schaft des Einschlagelements auf, wobei ein Außendurchmesser des Anlageabschnitts mindestens dreimal so groß ist wie ein Außendurchmesser des Schafts des Einschlagelements.

Auf diese Weise kann mittels des Anlageabschnitts eine zuverlässige vorläufige Fixierung eines Werkstücks an einem Gegenstand erfolgen. Dies beispielsweise auch dann, wenn eine Durchgangsbohrung im Werkstück deutlich größer ist als der Außendurchmesser des Schafts des Befestigungselements. Durch den Anlageabschnitt kann dann dennoch eine Vorspannkraft auf das Werkstück ausgeübt werden, die das Werkstück für ein Vorfixieren dann gegen den Gegenstand presst.

In Weiterbildung der Erfindung ist der Anlageabschnitt in Form einer auf den Schaft aufgefädelten Unterlegscheibe ausgebildet.

Auf diese Weise lässt sich der Anlageabschnitt in sehr einfacher Weise realisieren.

In Weiterbildung der Erfindung hat eine Durchgangsöffnung in der Unterlegscheibe, durch die sich der Schaft hindurcherstreckt, einen Durchmesser, der um mindestens 10% bis 100% größer ist als ein Außendurchmesser des Schafts.

Die Unterlegscheibe umgibt den Schaft somit mit vergleichsweise großem Spiel. Dadurch kann das Werkstück relativ zum Gegenstand noch ausgerichtet werden, auch wenn das Einschlagelement des erfindungsgemäßen Befestigungselements bereits eingeschlagen ist. Der Kopf des Einschlagelements muss selbstverständlich einen größeren Durchmesser aufweisen als die Durchgangsöffnung in der Unterlegscheibe. Die Vorspannkraft, die von dem erfindungsgemäßen Befestigungselement auf das Werkstück im Rahmen der Vorfixierung aufgebracht wird, ist noch so gering, dass das Werkstück, beispielsweise mit seitlichen Hammerschlägen, relativ zum Gegenstand ausgerichtet werden kann.

In Weiterbildung der Erfindung ist der Anlageabschnitt einstückig mit dem Einschlagelement ausgebildet.

In Weiterbildung der Erfindung weist der Anlageabschnitt wenigstens eine senkrecht zum Schaft verlaufende rinnenartige Ausformung auf.

Mittels des erfindungsgemäßen Befestigungselements können dadurch in sehr einfacher Weise Baustahlstäbe oder andere zylindrische Werkstücke in sehr einfacher Weise und dabei sicher vorfixiert werden. Beispielsweise können Baustahlstäbe oder auch Verstärkungskonstruktionen aus Baustahlstäben, sogenannte Moniereisen, mit den erfindungsgemäßen Befestigungselementen in sehr einfacher Weise vorfixiert werden, bevor diese Baustahlstäbe dann mit flüssigem Beton umschlossen werden.

In Weiterbildung der Erfindung weist der Anlageabschnitt eine dem Kopf abgewandte rutschhemmende Unterseite auf.

Beispielsweise ist eine Gummierung oder eine Scheibe aus elastischem gummiartigen Material vorgesehen. Beispielsweise kann der Anlageabschnitt aber auch eine raue Unterseite, eine Unterseite mit vorragenden Vorsprüngen oder Spitzen aufweisen. Die rutschhemmende Unterseite dient der zuverlässigen Vorfixierung eines Werkstücks an einem Gegenstand. Die rutschhemmende Unterseite ist vorteilhafterweise auf den Werkstoff des vorzufixierenden Werkstücks abgestimmt. Als rutschhemmend wird eine Unterseite des Unterlagenabschnitts bezeichnet, die im Vergleich mit einer glatten Metallunterseite des Anlageabschnitts einen höheren Reibungskoeffizienten zwischen der Unterseite des Anlagenabschnitts und der Oberseite des Werkstücks bewirkt.

Das der Erfindung zugrunde liegende Problem wird auch durch ein Verfahren zum Befestigen eines Werkstücks an einem Gegenstand gelöst, bei dem die folgenden Schritte vorgesehen sind: Einbringen eines Bohrlochs in den Gegenstand und Einbringen einer Durchgangsbohrung in das Werkstück, Einstecken eines erfindungsgemäßen Befestigungselements in die Durchgangsbohrung und das Bohrloch, Einschlagen des Einschlagelements in die Dübelhülse und dadurch vorläufiges Fixieren des Werkstücks an dem Gegenstand, wobei eine erste Haltekraft, mit der das Befestigungselement vor dem Versagen beaufschlagt werden kann, kleiner ist als eine zweite Haltekraft, mit der ein zweites Befestigungselement, das für eine endgültige Befestigung des Werkstücks am Gegenstand vorgesehen ist, beaufschlagt werden kann.

Das erfindungsgemäße Befestigungselement ist somit ausschließlich für die Vorfixierung vorgesehen. Diese Vorfixierung kann problemlos und extrem schnell durch einfaches Einstecken des Befestigungselements und Einschlagen des Einschlagelements in die Dübelhülse erfolgen. Die Haltekraft, die das erfindungsgemäße Befestigungselement dabei aufbringen kann, muss lediglich so groß sein, dass das Werkstück vorfixiert ist, um dann die zweiten Befestigungselemente, die für die endgültige Befestigung vorgesehen sind, anbringen zu können. Beispielsweise können die erfindungsgemäßen Befestigungselemente auch für eine Vorfixierung des Werkstücks verwendet werden und werden dann wieder entfernt, sobald eine stoffschlüssige Verbindung, beispielsweise durch Kleben, Löten oder Schweißen, zwischen dem Werkstück und dem Gegenstand erfolgt ist.

In Weiterbildung der Erfindung ist die erste Haltekraft um mindestens den Faktor 5, insbesondere den Faktor 10, kleiner als die zweite Haltekraft.

Wie ausgeführt, geht es bei dem erfindungsgemäßen Befestigungselement lediglich um eine Vorfixierung. Gegebenenfalls ist die erste Haltekraft so gering, dass das Werkstück, beispielsweise durch seitliche Hammerschläge, noch relativ zum Gegenstand ausgerichtet werden kann. Mittels der Vorfixierung soll das Werkstück nur in Position gehalten werden, so dass die zweiten Befestigungsmittel gesetzt werden können und/oder eine stoffschlüssige Verbindung erfolgen kann.

In Weiterbildung der Erfindung ist das Setzen wenigstens des zweiten Befestigungselements und/oder das stoffschlüssige Verbinden des Werkstücks und des Gegenstandes und dadurch das endgültige Fixieren des Werkstücks am Gegenstand vorgesehen.

In Weiterbildung der Erfindung ist das Entfernen des Befestigungselements nach dem Setzen wenigstens des zweiten Befestigungselements und/oder nach dem stoffschlüssigen Verbinden vorgesehen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Seitenansicht eines erfindungsgemäßen Befestigungselements gemäß einer ersten Ausführungsform,
- Fig. 2: eine abschnittsweise Ansicht eines erfindungsgemäßen Befestigungselements gemäß einer zweiten Ausführungsform,
- Fig. 3: eine abschnittsweise Schnittansicht eines erfindungsgemäßen Befestigungselements gemäß einer dritten Ausführungsform, und
- Fig. 4: mehrere aufeinanderfolgende Verfahrensschritte beim Befestigen eines Werkstücks an einem Gegenstand mit einem erfindungsgemäßen Befestigungselement.

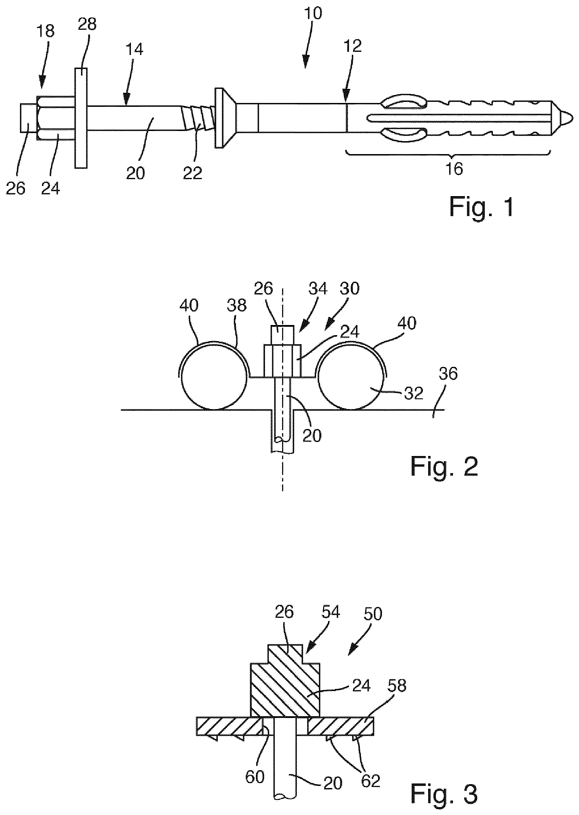

Fig. 1 zeigt ein erfindungsgemäßes Befestigungselement 10 mit einer Dübelhülse 12 aus Kunststoff und einem Einschlagelement 14. Das Einschlagelement 14 spreizt die Dübelhülse 12 beim Eintreiben des Einschlagelements 14 in die Dübelhülse 12 abschnittsweise in radialer Richtung auf. Speziell wird der Spreizbereich 16 der Dübelhülse 12 in radialer Richtung aufgespreizt und dadurch in einem Gegenstand verankert, insbesondere in einem Bohrloch des Gegenstands, wenn das Einschlagelement 14 in die Dübelhülse 12 eingetrieben wird, in Fig. 1 also nach rechts in die Dübelhülse 12 hineinbewegt wird.

Das Einschlagelement 14 weist einen Kopf 18 und einen Schaft 20 auf. Der Schaft 20 ist abschnittsweise mit einem Sägezahngewinde 22 versehen. Das Sägezahngewinde 22 ist so ausgebildet, dass es mit einer Eintreibkraft nach rechts in die Dübelhülse 12 hineinbewegt werden kann. Gegen ein Ausziehen des Einschlagelements 14 nach links aus der Dübelhülse heraus bietet das Sägezahngewinde 22 dann aber einen größeren Widerstand. Das Einschlagelement 14 kann mittels des Sägezahngewindes 22 auch in die Dübelhülse 12 eingeschraubt und wieder aus dieser herausgeschraubt werden. Auch nach dem Einschlagen kann das Einschlagelement 14 wieder aus der Dübelhülse 12 herausgeschraubt werden.

Der Kopf 18 weist eine Außenantriebsausbildung 24 auf und einen Schlagabschnitt 26. Die Außenantriebsausbildung 24 ist bei der dargestellten Ausführungsform als Außensechskant ausgebildet. Der Schlagabschnitt 26 weist eine zylindrische Form auf, bei der dargestellten Ausführungsform eine kreiszylindrische Form. Der Schlagabschnitt 26 schließt sich an die Außenantriebsausbildung 24 in Richtung auf das freie Ende des Kopfes 18 an, in Fig. 1 ist der Schlagabschnitt 26 also links der Außenantriebsausbildung 24 angeordnet.

Zwischen dem Kopf 18 und dem Schaft 20 des Einschlagelements 14 ist ein Anlageabschnitt 28 angeordnet. Der Anlageabschnitt 28 ist bei der dargestellten Ausführungsform scheibenförmig ausgebildet und einstückig mit dem Kopf 18 sowie dem Schaft 14 ausgebildet. Der Anlageabschnitt 28 weist einen wesentlich größeren Außendurchmesser auf als der Schaft 20. Speziell ist der Außendurchmesser des Anlageabschnitts 28 mindestens dreimal so groß wie der Außendurchmesser des Schafts 20. Bei der dargestellten Ausführungsform ist der Außendurchmesser des Anlageabschnitts 28 etwa fünfmal so groß wie der Außendurchmesser des Schafts 20. Mit dem Anlageabschnitt 28 wird eine Vorspannkraft zum Vorfixieren auf ein Werkstück ausgeübt.

Zum Befestigen eines Werkstücks an einem Gegenstand wird zunächst eine Durchgangsbohrung in dem Werkstück und ein Bohrloch in dem Gegenstand ausgebildet. Das Bohrloch in dem Gegenstand, beispielsweise in einem Betonboden, ist üblicherweise als Sackloch ausgebildet. Das Befestigungselement 10 wird dann durch die Durchgangsöffnung im Werkstück hindurch und abschnittsweise in das Bohrloch des Gegenstands eingesteckt. Dies kann soweit erfolgen, dass das in Fig. 1 linke Ende der Dübelhülse 12 an der Oberseite des Werkstücks anliegt und der Spreizbereich 16 vollständig im Gegenstand angeordnet ist. Eine Vorfixierung des Werkstücks am Gegenstand, beispielsweise an einem Betonboden, kann dann in sehr einfacher Weise dadurch erfolgen, dass das Einschlagelement 14 mit dem Hammer in die Dübelhülse 12 eingeschlagen wird, bis der Anlageabschnitt 28 auf dem Werkstück aufliegt. Bei richtiger Bemessung der Länge des Einschlagelements 14, der Dicke des Werkstücks und der Länge der Dübelhülse 12 spreizt dann das Einschlagelement 14 den Spreizbereich 16 der Dübelhülse 12 auf, so dass das Befestigungselement in dem Bohrloch im Gegenstand reibschlüssig verankert ist. Damit ist dann auch das Werkstück am Gegenstand vorfixiert.

Die Haltekraft des erfindungsgemäßen Befestigungselements 10 ist dabei deutlich geringer als die Haltekraft, die für eine endgültige Befestigung des Werkstücks am Gegenstand benötigt wird. Beispielsweise ist die Haltekraft, die mit dem erfindungsgemäßen Befestigungselement 10 aufgebracht werden kann, um den Faktor 5, insbesondere den Faktor 10, oder um einen Faktor zwischen 5 und 10 kleiner als die Haltekraft eines zweiten Befestigungselements, mit dem dann eine endgültige Fixierung erfolgt. Sinn und Zweck des erfindungsgemäßen Befestigungselements ist die Vorfixierung des Werkstücks am Gegenstand, um die zweiten Befestigungselemente an exakt der gewünschten Position in einfacher Weise setzen zu können oder auch um beispielsweise das Aushärten eines Klebstoffs zwischen Werkstück und Gegenstand abwarten zu können, ohne dass das Werkstück während der gesamten Zeit festgehalten werden muss. Beispielsweise kann das erfindungsgemäße Befestigungselement 10 auch dafür vorgesehen sein, das Werkstück am Gegenstand zu fixieren, um dann das Werkstück mit dem Gegenstand verlöten oder verschweißen zu können.

Beim Eintreiben des Einschlagelements 14 in die Dübelhülse 12 erfolgen die Schläge auf den Schlagabschnitt 26. Der Schlagabschnitt 26 verformt sich dabei zwangsläufig und vergrößert seinen Außendurchmesser. Der Schlagabschnitt 26 dient als Opferabschnitt. Der Außendurchmesser des Schlagabschnitts 26 ist kleiner als der Außendurchmesser der Außenantriebsausbildung 24. Selbst wenn sich also der Schlagabschnitt 26 so deformiert, dass sein Außendurchmesser größer wird, so beeinträchtigt dies nicht die Möglichkeit, das Einschlagelement 14 über die Außenantriebsausbildung 24 wieder ausschrauben zu können. Speziell kann eine Schraubnuss über die Außenantriebsausbildung 24 gesteckt werden, so dass das Einschlagelement 14 beispielsweise sehr schnell mit einem Akkuschrauber oder dergleichen ausgeschraubt werden kann. Vorteilhafterweise ist der Außendurchmesser des Schlagabschnitts um 10% bis 25% kleiner als ein in die Außenkontur der Außenantriebsausbildung 24 einbeschriebener Kreis. In einem solchen Fall ist nicht zu befürchten, dass der Schlagabschnitt 26 beim Eintreiben des Einschlagelements 14 seinen Durchmesser so stark vergrößert, dass er über die Außenkontur der Außenantriebsausbildung 24 hinausragt.

Beim Ausschrauben des Einschlagelements 14 aus der Dübelhülse 12 wird eine Vorspannkraft, mit der der Spreizabschnitt 16 radial nach außen gegen die Innenwand des Bohrlochs in dem Gegenstand gepresst wird, wesentlich verringert und insbesondere auf einen Wert nahe null verringert. Die Dübelhülse 12 kann dadurch in sehr einfacher Weise aus dem Bohrloch herausgezogen werden und auch durch das Durchgangsloch im Werkstück hindurchgezogen werden. Dies kann beispielsweise dadurch erfolgen, dass an dem Anlageabschnitt 28 in Fig. 1 nach links gezogen wird. Es ist im Rahmen der Erfindung durchaus denkbar, dass ein Spezialwerkzeug benutzt wird, mit dem der Anlageabschnitt hintergriffen wird, um das Befestigungselement besonders schnell aus dem Werkstück und dem Gegenstand herausziehen zu können.

Während das Werkstück mit dem erfindungsgemäßen Befestigungselement 10 an dem Gegenstand vorfixiert ist, werden zweite Befestigungselemente gesetzt, um das Werkstück endgültig und mit der vorgeschriebenen Haltekraft am Gegenstand zu befestigen. Nach dem Entfernen des erfindungsgemäßen Befestigungselements 10 kann dann beispielsweise in die vorhandene Durchgangsöffnung und in das vorhandene Bohrloch ein zweites Befestigungselement eingesetzt und befestigt werden.

Der Vorteil des erfindungsgemäßen Befestigungselements 10 liegt darin, dass durch einfaches Einstecken und Einschlagen sehr schnell eine Vorfixierung erzielt werden kann. Die Haltekraft der Vorfixierung muss dabei nur so groß sein, dass die endgültige Fixierung des Werkstücks am Gegenstand möglich ist, beispielsweise durch Setzen von Bohrlöchern und zweiten Befestigungselementen oder durch stoffschlüssiges Verbinden des Werkstücks mit dem Gegenstand.

Fig. 2 zeigt eine abschnittsweise Schnittansicht eines erfindungsgemäßen Befestigungselements 30 gemäß einer weiteren Ausführungsform der Erfindung. Die Dübelhülse 12 ist in Fig. 2 der Einfachheit halber nicht dargestellt. Das Befestigungselement 30 ist dafür vorgesehen, eine Baustahlkonstruktion 32 auf einem Betonboden 36 vorzufixieren.

Das Einschlagelement 34 des Befestigungselements 30 unterscheidet sich vom Einschlagelement 14 der Ausführungsform der Fig. 1 nur dadurch, dass ein anders ausgebildeter Anlageabschnitt 38 vorgesehen ist. Der Schlagabschnitt 26, die Außenantriebsausbildung 24 und der Schaft 20 des Einschlagelements 34 sind genau gleich ausgebildet wie beim Einschlagelement 14 der Fig. 1 und werden daher nicht erneut erläutert.

Der Anlageabschnitt 38 ist in Fig. 2 lediglich schematisch dargestellt und weist zwei rinnenförmige Ausnehmungen 40 auf. Die rinnenförmigen Ausnehmungen 40 sind jeweils dazu vorgesehen, einen Abschnitt der Baustahlkonstruktion 32 aufzunehmen und zu fixieren.

Nach der Vorfixierung der Baustahlkonstruktion 32 auf dem Betonboden 36 mit dem erfindungsgemäßen Befestigungselement 30 wird flüssiger Beton auf den Betonboden 36 aufgebracht. Nach dem Aushärten ist die Baustahlkonstruktion 32 dadurch sicher fixiert. Das erfindungsgemäße Befestigungselement 30 bleibt in diesem Fall in dem aufgegossenen Beton.

Die Darstellung der Fig. 3 zeigt ein erfindungsgemäßes Befestigungselement 50 gemäß einer weiteren Ausführungsform in einer abschnittsweisen Schnittansicht. Die Dübelhülse 12 ist der Einfachheit halber nicht dargestellt. Ein Einschlagelement 54 weist einen Kopf mit einem Schlagabschnitt 26 und einem Außenantriebsabschnitt 24 auf, die gleich ausgebildet sind wie bei dem Einschlagelement 14 der Fig. 1 und daher nicht erneut erläutert werden. Auch der Schaft 20 des Einschlagelements 54 ist gleich ausgebildet wie beim Einschlagelement 14 der Fig. 1. Die nicht dargestellte Dübelhülse entspricht ebenfalls der Dübelhülse 12 der Fig. 1.

Ein Anlageabschnitt 58 ist als Unterlegscheibe ausgebildet, die auf den Schaft 20 aufgefädelt ist. Ein Außendurchmesser des Kopfes an der Unterseite der Außenantriebsausbildung 24 ist größer als eine Durchgangsöffnung 60 der Unterlegscheibe, die den Anlageabschnitt 58 bildet. Ein Innendurchmesser der Durchgangsöffnung 60 ist deutlich größer, insbesondere 1,5 mal bis 3 mal, speziell 2 mal, so groß wie der Außendurchmesser des Schafts 20. Der Anlageabschnitt 58 kann somit relativ zum Schaft bewegt werden. Auch dann, wenn das Einschlagelement 54 bereits in die Dübelhülse 12 eingeschlagen ist und dadurch mit der Unterseite des Anlageabschnitts 58 eine Vorspannkraft auf das Werkstück ausgeübt wird, kann das Werkstück noch relativ zu dem Gegenstand bewegt werden, beispielsweise durch leichte Hammerschläge seitlich gegen das Werkstück. Der Anlageabschnitt 58 kann nämlich dann zusammen mit dem Werkstück relativ zum Schaft 20 verschoben werden.

Eine dem in Fig. 3 nicht dargestellten Werkstück zugewandte Unterseite des Anlageabschnitts 58 ist mit einer rutschhemmenden Gestaltung versehen. Diese rutschhemmende Gestaltung ist in Form von zackenartigen Vorsprüngen 62 ausgebildet. Die zackenartigen Vorsprünge 62 graben sich ein Stück weit in die Oberseite des Werkstücks ein, das beispielsweise aus Holz besteht. Der Anlageabschnitt 58 ist dadurch relativ zum Werkstück fixiert. Beim Ausrichten des Werkstücks relativ zum Gegenstand kann dann der Anlageabschnitt 58 zusammen mit dem Werkstück relativ zum Schaft 20 des Einschlagelements 54 und damit relativ zum Gegenstand bewegt werden, ohne dass eine Vorfixierung vollständig aufgehoben wird, da ja mittels des erfindungsgemäßen Befestigungselements 50 immer noch eine Vorspannkraft auf das Werkstück ausgeübt wird.

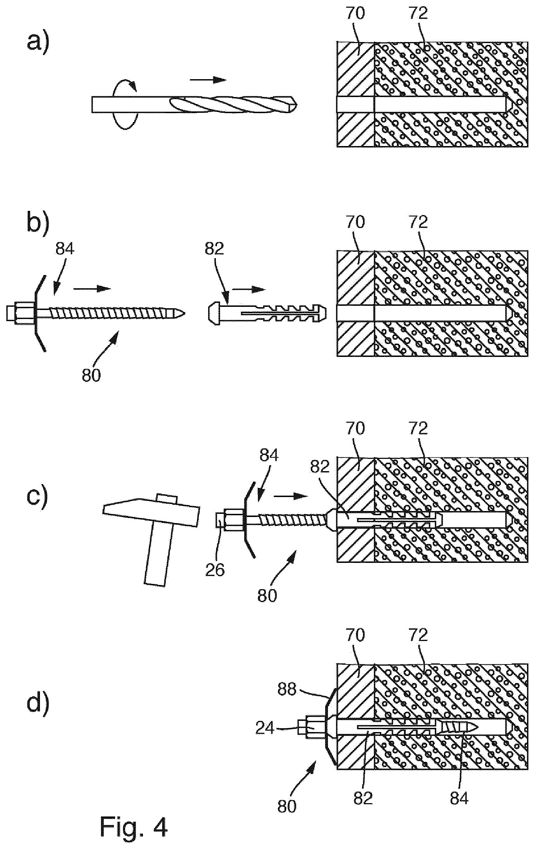

Fig. 4 zeigt mehrere Schritte beim Befestigen eines Werkstücks 70 an einem Gegenstand 72 mit einem erfindungsgemäßen Befestigungselement 80 gemäß einer weiteren Ausführungsform der Erfindung. Das Werkstück 70 ist beispielsweise als Geländer oder Handlaufabschnitt ausgebildet. Der Gegenstand 72 ist Abschnitt eines Mauerwerks, beispielsweise einer Gebäudewand.

Im Schritt a wird in das Werkstück 70 eine Durchgangsbohrung eingebracht und nach dem Durchdringen des Werkstücks 70 wird in den Gegenstand 72 ein Sackloch eingebracht.

Im Schritt b wird nach dem Reinigen des Bohrlochs und der Durchgangsöffnung das erfindungsgemäße Befestigungselement 80 in die Durchgangsöffnung im Werkstück 70 und das Bohrloch im Gegenstand 72 eingebracht. Dies ist durch zwei Pfeile oberhalb der Dübelhülse 82 und oberhalb des Einschlagelements 84 symbolisiert.

Im Schritt c ist die Dübelhülse 82 so weit in das Werkstück 70 und den Gegenstand 72 eingesteckt worden, dass ein Kopf der Dübelhülse 82 auf einer dem Gegenstand 72 abgewandten Oberseite des Werkstücks 70 aufliegt. Der Spreizabschnitt der Dübelhülse 82 liegt vollständig innerhalb des Gegenstands 72.

In diesem Zustand wird nun das Einschlagelement 84 mit einigen Hammerschlägen auf den Schlagabschnitt 26 in die Dübelhülse 82 eingetrieben. Das Einschlagen beziehungsweise Eintreiben des Einschlagelements 84 erfolgt so lange, bis der Zustand im Schritt d erreicht ist. Ein Anlageabschnitt 88 des Befestigungselements 80 liegt nun auf der Oberseite des Werkstücks 70 auf, die dem Gegenstand 72 abgewandt ist. Das Einschlagelement 84 hat die Dübelhülse 82 vollständig durchdrungen und diese dadurch in dem Bereich, in dem die Dübelhülse 82 in dem Bohrloch im Gegenstand 72 angeordnet ist, radial nach außen aufgespreizt. Der Anlageabschnitt 88 spannt das Werkstück 70 gegen den Gegenstand 72 vor.

Die Haltekraft, die mittels des Befestigungselements 80 auf das Werkstück 70 ausgeübt wird, ist dabei wesentlich kleiner als eine Haltekraft, mit der das Werkstück 70 endgültig an dem Gegenstand 72 befestigt werden muss. Beispielsweise ist die erste Haltekraft, die mit dem Befestigungselement 80 ausgeübt wird, um den Faktor 5 bis den Faktor 10 kleiner als die zweite Haltekraft, mit der das Werkstück 70 im endgültig montierten Zustand an dem Gegenstand 72 gehalten werden muss. Die zweite Haltekraft ist dabei eine Haltekraft, die beispielsweise durch ein einziges zweites Befestigungselement aufgebracht wird.

Der Anlageabschnitt 88 ist als Blechstreifen ausgebildet, der an seinen freien Enden leicht abgewinkelt ist. Der Anlageabschnitt 88 kann dadurch leicht federn, um das Werkstück 70 zuverlässig am Gegenstand 72 vorzufixieren.

Nachdem im Zustand d das Werkstück 70 am Gegenstand 72 vorfixiert ist, wird der Gegenstand 70 endgültig am Gegenstand 72 fixiert. Abschließend kann das Befestigungselement 80 entfernt werden. Dies geschieht dadurch, dass das Einschlagelement 84 mittels der Außenantriebsausbildung 24 aus der Dübelhülse 82 wenigstens so weit herausgeschraubt wird, bis das Einschlagelement vollständig oder fast vollständig aus dem Bohrloch im Gegenstand 72 und damit aus dem Spreizbereich der Dübelhülse 82 entfernt ist. Dadurch wird auch der Spreizabschnitt der Dübelhülse 82 nicht mehr radial nach außen gedrückt und das Einschlagelement 84 kann in einfacher Weise zusammen mit der Dübelhülse 82 aus dem Bohrloch im Gegenstand 72 und der Durchgangsöffnung im Werkstück 70 herausgezogen werden, in der Darstellung der Fig. 4 nach links.

In das Bohrloch im Gegenstand 72 und die Durchgangsöffnung im Werkstück 70 kann dann ein zweites Befestigungselement eingesetzt werden, beispielsweise ein Kunststoffdübel mit einer Schraube.

Mit dem erfindungsgemäßen Befestigungselement und dem erfindungsgemäßen Verfahren ist eine sehr einfache und vor allem schnelle Vorfixierung eines Werkstücks an einem Gegenstand möglich. Das Werkstück kann dadurch in der vorgesehenen Endposition am Gegenstand gehalten werden, um dann eine endgültige Befestigung oder Fixierung des Werkstücks am Gegenstand vornehmen zu können. Die endgültige Fixierung kann beispielsweise durch zweite Befestigungselemente erfolgen, aber auch stoffschlüssig, beispielsweise durch Kleben, Löten oder Schweißen.

## Patentansprüche

1. Befestigungselement (10; 30; 50; 80) mit einer Dübelhülse (12) aus Kunststoff und einem Einschlagelement (14; 34; 54; 84) zum Eintreiben in die Dübelhülse (12), wobei das Einschlagelement die Dübelhülse (12) beim Eintreiben des Einschlagelements in die Dübelhülse (12) wenigstens abschnittsweise in radialer Richtung aufspreizt, wobei das Einschlagelement (14; 34; 54; 84) einen Schaft (20) und einen Kopf (18) aufweist, wobei der Schaft (20) wenigstens abschnittsweise mit einer Gewindeausbildung und der Kopf (18) mit einer Außenantriebsausbildung (24) versehen ist, wobei der Kopf (18) einen Schlagabschnitt (26) aufweist, der sich ausgehend von der Außenantriebsausbildung (24) bis zum freien Ende des Kopfs (18) erstreckt, und wobei der Schlagabschnitt (26) eine zylindrische Form und einen kleineren Außendurchmesser aufweist als die Außenantriebsausbildung (24).

2. Befestigungselement nach Anspruch 1, **gekennzeichnet durch** einen Anlageabschnitt (28; 38; 58; 88) zwischen dem Kopf (18) und dem Schaft (20) des Einschlagelements (14; 34; 54; 84), wobei ein Außendurchmesser des Anlageabschnitts (28; 38; 58; 88) mindestens dreimal so groß ist wie ein Außendurchmesser des Schafts (20) des Einschlagelements (14; 34; 54; 84).

3. Befestigungselement nach Anspruch 2, **dadurch gekennzeichnet dass** der Anlageabschnitt in Form einer auf den Schaft (20) aufgefädelten Unterlegscheibe ausgebildet ist.

4. Befestigungselement nach Anspruch 3, **dadurch gekennzeichnet, dass** eine Durchgangsöffnung (60) in der Unterlegscheibe, durch die sich der Schaft (20) hindurcherstreckt, einen Durchmesser hat, der um mindestens 10% bis 100% größer ist als ein Außendurchmesser des Schafts (20).

5. Befestigungselement nach Anspruch 2, **dadurch gekennzeichnet, dass** der Anlageabschnitt (28) einstückig mit dem Einschlagelement (14) ausgebildet ist.

6. Befestigungselement nach wenigstens einem der Ansprüche 2 bis 5, **dadurch gekennzeichnet, dass** der Anlageabschnitt (38) wenigstens eine senkrecht zum Schaft (20) verlaufende rinnenartige Ausformung (40) aufweist.

7. Befestigungselement nach einem der Ansprüche 2 bis 6, **dadurch gekennzeichnet, dass** der Anlageabschnitt (58) eine dem Kopf abgewandte rutschhemmende Unterseite aufweist.

8. Verfahren zum Befestigen eines Werkstücks (70) an einem Gegenstand (72), mit folgenden Schritten: Einbringen eines Bohrlochs in den Gegenstand (72) und Einbringen einer Durchgangsbohrung in das Werkstück (70), Einstecken eines Befestigungselements (80) nach einem der vorstehenden Ansprüche in die Durchgangsbohrung und das Bohrloch, Einschlagen des Einschlagelements (84) in die Dübelhülse (12) und dadurch vorläufiges Fixieren des Werkstücks (70) an dem Gegenstand (72), wobei eine erste Haltekraft, mit der das Befestigungselement (80) vor dem Versagen beaufschlagt werden kann, kleiner ist als eine zweite Haltekraft, mit der ein zweites Befestigungselement das für eine endgültige Befestigung des Werkstücks (70) am Gegenstand (72) vorgesehen ist, beaufschlagt werden kann.

9. Verfahren nach Anspruch 8, **dadurch gekennzeichnet, dass** die erste Haltekraft um mindestens den Faktor 5, insbesondere den Faktor 10, insbesondere um einen Faktor zwischen 5 und 10, kleiner ist als die zweite Haltekraft.

10. Verfahren nach Anspruch 8 oder 9, **gekennzeichnet durch** Setzen des zweiten Befestigungselements oder mehrerer zweiter Befestigungselemente und/oder stoffschlüssiges Verbinden des Werkstücks (70) und des Gegenstandes (72) und dadurch endgültiges Fixieren des Werkstücks (70) am Gegenstand (72).

11. Verfahren nach Anspruch 8, 9 oder 10, **gekennzeichnet durch** Entfernen des Befestigungselements (80) nach dem Setzen des zweiten Befestigungselements oder mehrerer zweiter Befestigungselemente und/oder nach dem stoffschlüssigen Verbinden.

## Claims

1. Fastening element (10; 30; 50; 80) having a dowel sleeve (12) of plastics material, and an impaction element (14; 34; 54; 84) for driving into the dowel sleeve (12), wherein the impaction element expands the dowel sleeve (12) at least in portions in the radial direction when driving the impaction element into the dowel sleeve (12), wherein the impaction element (14; 34; 54; 84) has a shank (20) and a head (18), wherein the shank (20) is provided at least in portions with a thread formation and the head (18) is provided with an external drive configuration (24), wherein the head (18) has an impact portion (26) which, proceeding from the external drive configuration (24), extends to the free end of the head (18), and wherein the impact portion (26) has a cylindrical shape and a smaller external diameter than the external drive configuration (24).

2. Fastening element according to Claim 1, **characterized by** a contact portion (28; 38; 58; 88) between the head (18) and the shank (20) of the impaction element (14; 34; 54; 84), wherein an external diameter of the contact portion (28; 38; 58; 88) is at least three times larger than an external diameter of the shank (20) of the impaction element (14; 34; 54; 84).

3. Fastening element according to Claim 2, **characterized in that** the contact portion is designed in the form of washer threaded onto the shank (20).

4. Fastening element according to Claim 3, **characterized in that** a passage opening (60) in the washer, through which the shank (20) extends, has a diameter that is at least 10% to 100% larger than an external diameter of the shank (20).

5. Fastening element according to Claim 2, **characterized in that** the contact portion (28) is formed integrally with the impaction element (14).

6. Fastening element according to at least one of Claims 2 to 5, **characterized in that** the contact portion (38) has at least one channel-type moulding (40) which extends perpendicularly to the shank (20).

7. Fastening element according to one of Claims 2 to 6, **characterized in that** the contact portion (58) has a non-slip lower side which faces away from the head.

8. Method for fastening a workpiece (70) to an object (72), comprising the following method steps: incorporating a drilled hole into the object (72) and incorporating a through hole into the workpiece (70); inserting a fastening element (80) according to one of the preceding claims into the through hole and the drilled hole; driving the impaction element (84) into the dowel sleeve (12) and thereby temporarily fixing the workpiece (70) to the object (72); wherein a first holding force with which the fastening element (80) can be impinged before failure is smaller than a second holding force with which a second fastening element, which is provided for a final fastening of the workpiece (70) to the object (72), can be impinged.

9. Method according to Claim 8, **characterized in that** the first holding force is smaller than the second holding force by at least a factor of 5, in particular a factor of 10, in particular by a factor between 5 and 10.

10. Method according to Claim 8 or 9, **characterized by** setting the second fastening element, or a plurality of second fastening elements, and/or by connecting the workpiece (70) and the object (72) in a materially integral manner/by a substance-to-substance bond, and thereby finally fixing the workpiece (70) to the object (72).

11. Method according to Claim 8, 9 or 10, **characterized by** removing the fastening element (80) after setting the second fastening element, or the plurality of second fastening elements, and/or after materially integral connecting/substance-to-substance bonding.

## Revendications

1. Élément de fixation (10 ; 30 ; 50 ; 80) comprenant un manchon de cheville (12) en matière plastique et un élément à enfoncer (14 ; 34 ; 54 ; 84) destiné à être enfoncé dans le manchon de cheville (12), l'élément à enfoncer écartant le manchon de cheville (12) au moins partiellement dans la direction radiale lors de l'enfoncement de l'élément à enfoncer dans le manchon de cheville (12), l'élément à enfoncer (14 ; 34 ; 54 ; 84) comprenant une tige (20) et une tête (18), la tige (20) étant pourvue au moins partiellement d'un filetage et la tête (18) d'une formation d'entraînement extérieure (24), la tête (18) comprenant une partie de frappe (26) qui s'étend à partir de la formation d'entraînement externe (24) jusqu'à l'extrémité libre de la tête (18), et la partie de frappe (26) présentant une forme cylindrique et un diamètre extérieur plus petit que la formation d'entraînement externe (24).

2. Élément de fixation selon la revendication 1, **caractérisé par** une partie d'appui (28 ; 38 ; 58 ; 88) entre la tête (18) et la tige (20) de l'élément à enfoncer (14 ; 34 ; 54 ; 84), un diamètre extérieur de la partie d'appui (28 ; 38 ; 58 ; 88) étant au moins trois fois plus grand qu'un diamètre extérieur de la tige (20) de l'élément à enfoncer (14 ; 34 ; 54 ; 84).

3. Élément de fixation selon la revendication 2, **caractérisé en ce que** la partie d'appui est réalisée sous la forme d'une rondelle enfilée sur la tige (20).

4. Élément de fixation selon la revendication 3, **caractérisé en ce qu'**une ouverture de passage (60) dans la rondelle, à travers laquelle s'étend la tige (20), a un diamètre qui est au moins 10 % à 100 % plus grand qu'un diamètre extérieur de la tige (20).

5. Élément de fixation selon la revendication 2, **caractérisé en ce que** la partie d'appui (28) est formée d'un seul tenant avec l'élément à enfoncer (14).

6. Élément de fixation selon l'une des revendications 2 à 5, **caractérisé en ce que** la partie d'appui (38) comprend au moins une formation en forme de rainure (40) s'étendant perpendiculairement à la tige (20).

7. Élément de fixation selon l'une des revendications 2 à 6, **caractérisé en ce que** la partie d'appui (58) comprend une face inférieure antidérapante opposée à la tête.

8. Procédé pour fixer une pièce (70) sur un objet (72), comprenant les étapes suivantes : réalisation d'un trou dans l'objet (72) et réalisation d'un trou traversant dans la pièce à traiter (70), insertion d'un élément de fixation (80) selon l'une des revendications précédentes dans le trou traversant et dans le trou, enfoncement de l'élément à enfoncer (84) dans le manchon de cheville (12) et fixation provisoire de la pièce à traiter (70) sur l'objet (72), une première force de retenue, selon laquelle l'élément de fixation (80) est apte à être sollicité avant la rupture, étant inférieure à une deuxième force de retenue selon laquelle un deuxième élément de fixation est prévu pour une fixation définitive de la pièce à traiter (70) sur l'objet (72).

9. Procédé selon la revendication 8, **caractérisé en ce que** la première force de retenue est inférieure d'au moins un facteur 5, en particulier d'un facteur 10, en particulier d'un facteur compris entre 5 et 10, à la deuxième force de retenue.

10. Procédé selon la revendication 8 ou la revendication 9, **caractérisé par** la mise en place du deuxième élément de fixation ou de plusieurs deuxièmes éléments de fixation et/ou l'assemblage par adhérence/matériau à matériau de la pièce (70) et de l'objet (72) et, de ce fait, la fixation définitive de la pièce (70) à traiter sur l'objet (72).

11. Procédé selon la revendication 8, 9 ou 10, **caractérisé par** le retrait de l'élément de fixation (80) après la mise en place du deuxième élément de fixation ou de plusieurs deuxièmes éléments de fixation et/ou après la liaison par adhérence/matériau à matériau.
